# EUROPEAN PATENT SPECIFICATION

(11) **EP 3 047 492 B1**
(45) Date of publication and mention of the grant of the patent: **20.03.2019**
(21) Application number: 14846208.8
(22) Date of filing: 19.09.2014
(51) Int. Cl.: H04L 12/10, H04L 12/40, H04B 10/272, H04B 10/80

(54) **FIBER OPTIC COMMUNICATIONS NETWORK**
GLASFASERKOMMUNIKATIONSNETZ
RÉSEAU DE COMMUNICATION À FIBRES OPTIQUES

(30) Priority: 19.09.2013 US 201361880030 P
(43) Date of publication of application: 27.07.2016
(73) Proprietor: Radius Universal, A Limited Liability Company of the State of New York, Lynbrook, New York 11563 (US)
(72) Inventor: SIPES, Donald Lee, Colorado Springs, Colorado 80904 (US); VANDERSLUIS, Donald, Sarasota, Florida 34235 (US)
(74) Representative: Grünecker Patent- und Rechtsanwälte PartG mbB
(86) International application number: PCT/US2014/056506
(87) International publication number: WO 2015/042366

(56) References cited:
- US-A1- 2005 229 016
- US-A1- 2006 089 230
- US-A1- 2010 183 262
- US-A1- 2010 183 262
- US-A1- 2010 299 544
- US-A1- 2010 319 956
- US-A1- 2010 319 956
- US-B1- 7 404 091
- US-B1- 8 502 733
- US-B1- 8 502 733
- US-B2- 6 931 183

## Description

### BACKGROUND

After a number of years of enterprise Local Area Network (LAN) evolution, a stable architecture has been arrived at that has become ubiquitous worldwide (with over 3 billion LAN user connections in 2010 projected to grow to over 20 billion by 2020). This architecture is essentially a star topology where every user computer or other network connected device is connected to a Layer 2 switch via a direct cable. The upstream ports on the switch were connected to servers, routers or other switched to complete the network.

In the vast majority of these networks, the cables connecting these user devices to the switch is CAT 5 cable and the connection protocol is 100 Megabit Ethernet with a maximum span length of 100m. Power can be provided in addition to the communications via the Power over Ethernet (PoE) standard to a maximum of 30W. In facilities where there are longer distances, the "edge" switches are placed closer to the user, and networks of switches are created to create an additional network upstream of the edge switch. Network performance is characterized by not only the speed of the data links, but also the delay, or latency, for the signals to go over the cable and through the layers of switching devices. The more switches in line between a user and another user or a server or the internet the worse the overall network performance.

The exponential growth in both the number of network connected devices and in the consumption of multimedia-related content places increasing demands for higher bandwidth on the enterprise networks that support them. However, conventional network configurations, which are often based on home-run connections from an edge switch to a client device based on long runs of Category 5 (CAT 5) cables, are unable to accommodate the bandwidth growth necessary to meet these increasing demands due to the limitations in bandwidth over long distances for CAT 5 cables.

In particular, Layer 2 switches comprise Input/Output interfaces and a switch fabric. Layer 2 switching is very fast and has low latency. The inclusion of other network features has led to the deployment of edge switches that have Layer 3 and 4 functionality as well. The addition of mobile users and the need for reconfigurability has led to the LAN network being overlaid with wireless multi-access networks such as defined by the 802.11 WiFi standard. Early Layer 2 star networks were used primarily for accessing local network resources such as servers, storage, or printers or wide area network or basic WAN internet functions such as email and web page viewing. New applications, such as video viewing, rich media web or social networks and video conferencing, have increased the need for higher bandwidth, lower latency (delay) LAN networks. Unfortunately current networks are limited to 100Mbs by the use of the CAT 5 Cable and the lengths of the cable runs. One way that networks are being upgraded to achieve 1000 Mbs or 1Gbs speed is by moving the edge switch closer to groups of users, often below 20m where 1000BaseT (Gigabit Ethernet) will run reliably on CAT 5 cable. While solving the cable speed problem, this approach introduces additional problems by both increasing network complexity and network latency.

Network administrators try to achieve better performance by upgrading the cable in the user home run links to higher grades of cable like Category 6 (CAT 6) or Category 7 (CAT 7) cable. These types of solutions are in themselves only temporary as bandwidth increases above 1G to 10G will only bring back the same problem. These conventional upgrade approaches involving replacement of existing CAT 5 cables with CAT 6 or CAT 7 cables, or adding remote network switches deep in the network within GbE reach of a CAT 5 cable, are not ideal, as they add significant amounts of network latency and complexity while only offering modest improvements to overall network performance. Further, these higher-category cables have significant cost premiums.

Using fiber optic links instead of CAT cables is another option in communications networks, but fiber optic technology has not gained much traction in the enterprise network context due to the high cost of conventional fiber optic transceivers, the labor costs involved in installing and terminating conventional fiber optic links, and the inability of conventional fiber optic links to interface with Power over Ethernet (PoE) connections and network components utilizing the PoE standard.
Document US 2010/0319956 A1 shows hybrid cables for conveying data and conducting operating power to electrically powered devices in a vehicle, wherein data is conveyed between two electrical contacts by an internal set of electrical conductors.
Document US 8,502,733 B1 shows an intelligent backhaul system for deployment in the presence of existing radio systems and processing and network elements to manage and control the deployment and management of backhaul of radios that connect remote edge access networks to core networks in a geographic zone which co-exist with such existing systems or other sources of interference within a radio environment.
Document US 2010/0183262 A1 shows an active jack which is a powered device and power- and-data deployments for powering network components and destination devices. The active jack is installed as the network connection at a workstation which provides the capability to determine the physical location of a destination device in real time. Uninterruptible power supplies may be used to provide power to network components, for example during an emergency.

### SUMMARY

The present invention is defined in the appended independent claims to which reference should be made. Advantageous features are set out in the appended dependent claims.

Embodiments of the invention integrate ultra-high speed communications with low-voltage powering in a simple-to-deploy and reconfigurable network, compatible with power over Ethernet (PoE) infrastructure and capable of achieving power provisioning to end devices at power levels of 100 to 180 watts or more. Further, low voltage power and high speed data may be simultaneously provided to a wide variety of devices via a single cable.

Embodiments of the invention include, for example, a fiber optic communications network having a flexible and easily reconfigurable low-cost and low-voltage architecture. The architecture includes cost-efficient optical transceivers, robust connection interface devices, fiber links having inexpensive terminations, and hybrid fiber-power cable links that transition to PoE-compatible connections. Additionally, the architecture allows for connector-less installation utilizing a low cost and easy-to-deploy fiber terminating and joining process, as well as allowing integration of power transfer and communications for simultaneous connection of both powered and non-powered devices. Further features and advantages of the invention will be discussed in further detail below.

### BRIEF DESCRIPTION OF THE SEVERAL VIEWS OF THE DRAWINGS

While the appended claims set forth the features of the present invention with particularity, the invention, together with its objects and advantages, may be best understood from the following detailed description taken in conjunction with the accompanying drawings of which:
Figures 1A-1C are block diagrams illustrating components of a fiber optic communications-based network.
Figure 2 is a block diagram illustrating components of a Media Converter Array (MCA).
Figures 3A and 3B are diagrams illustrating components of a GGP cable.
Figure 4 is a block diagram illustrating components of a Power Insertion Device.
Figure 5 is a schematic diagram illustrating components of a hybrid power/fiber cable.
Figure 6 is a block diagram illustrating components of a Connection Interface device.
Figures 7A-7B are block diagram illustrating exemplary configurations of end devices connected to Connection Interface devices.
Figures 8A-8B are block diagrams illustrating exemplary components of a Connection Interface device in further detail.
Figure 9 is a flowchart illustrating a process for operating a Connection Interface device.

### DETAILED DESCRIPTION

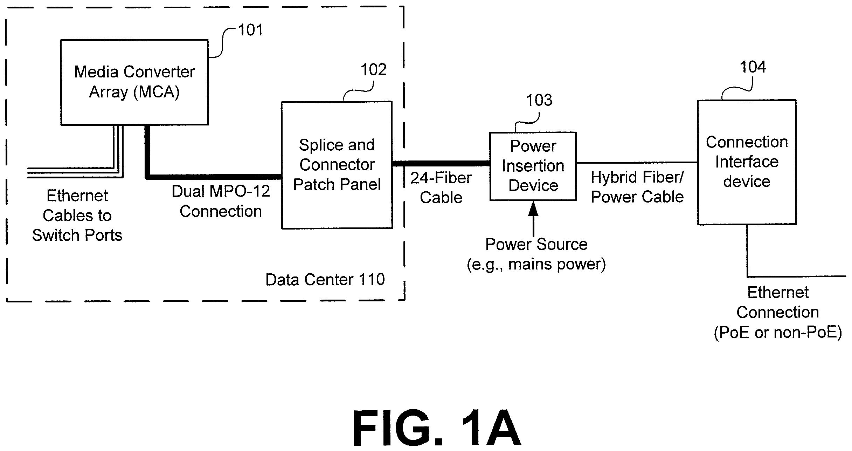

FIG. 1A is a block diagram illustrating components of a fiber optic communications-based network in an exemplary embodiment of the inventive architecture. The depicted network connects a network switch (not depicted) in a data center 110 with CAT5-compatible ports to end devices utilizing CAT5 connection (not depicted). Data from the switch is communicated to a Media Converter Array (MCA) 101 via CAT5 cables, and the MCA 101 provides for conversion to a fiber optic-based connection (e.g., a dual MPO-12 fiber connection) to a splice and connector patch panel 102. The splice and connector patch panel 102 is connected to a Power Insertion Device 103 via a fiber connection (e.g., a 24 GGP fiber cable, which is a cable containing 24 individual fiber connections). The splice and connector patch panel 102 provides for mechanical splices or connectors which connect the fibers from the dual MPO-12 fiber connection to the 24 GGP fiber cable. The splice and connector patch panel 102 also allows for appropriate levels of bandwidth to be provided for particular users (e.g., patching of a 10GbE source to an end device requiring a 10GbE connection). It will be appreciated that the data center 110 may further include, for example, servers for executing remote desktop software and/or for carrying out file transfers that are connected to the switch and/or splice and connector patch panel 102 via fiber optic and/or Ethernet connections.

The Power Insertion Device 103 provides for power input to one or more fiber connections to Connection Interfaces 104 (i.e., fiber fan out), which are in turn connected to end devices (not depicted). Only one exemplary connection between the Power Insertion Device 103 and a Connection Interface 104 is shown in FIG. 1A, utilizing a hybrid power and fiber cable (e.g., a multimode GGP fiber with 18 AWG copper for power). The Power Insertion Device 103 utilizes mains power (for example, 110VAC (with up to 20A) input), and inserts power into the network along hybrid power and fiber cables connected to the Power Insertion Device 103. The hybrid power and fiber cables connected to the Power Insertion Device 103 (as well as non-powered fiber cables connected to the Power Insertion Device 103 (not depicted)), connect to Connection Interface devices 104, which allow for conversion to PoE or non-PoE Ethernet connections which are plugged into end devices (e.g., PoE or non-PoE CAT5 cables).

Thus, this exemplary network architecture provides a transparent L1 network from an edge switch to a client device, with the fiber link being passive to data traffic aside from an electrical to optical (E to O) and an optical to electrical (O to E) conversion process (which does not require additional network switches and adds close to zero packet timing jitter). Because the data center 110 utilizes an optical connector or mechanical splice patch panel, and a low-cost multi-fiber cable transports data to a convenient area near local clients where power is injected via the Power Insertion Device 103, this exemplary network architecture is able to provide data transmission at a high bandwidth and low cost, while maintaining compatibility on the data center end with CAT interfaces utilized by an edge switch (via the MCA 101) and maintaining compatibility on the client device end with CAT interfaces utilized by client end devices (via the Connection Interface device 104). This allows for networks to be upgraded from conventional bandwidth-limited CAT implementations to the high-performance and low-cost fiber network architecture depicted in FIG. 1A in a flexible and cost-efficient manner by replacing components between the edge switch and the client device without requiring any changes to be made to the edge switch or end client devices.

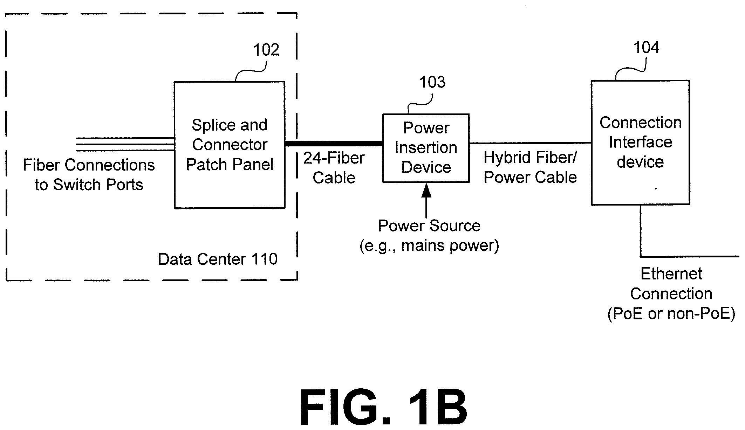

FIG. 1B is a block diagram illustrating an exemplary network architecture connected to a network switch with fiber optic-compatible ports (e.g., ports adhering to the SFP standard). The exemplary architecture depicted in FIG. 1B is similar to the architecture shown in FIG. 1A, but since fiber optic connections can directly be made with the network switch, an MCA is not needed in the architecture of FIG. 1B.

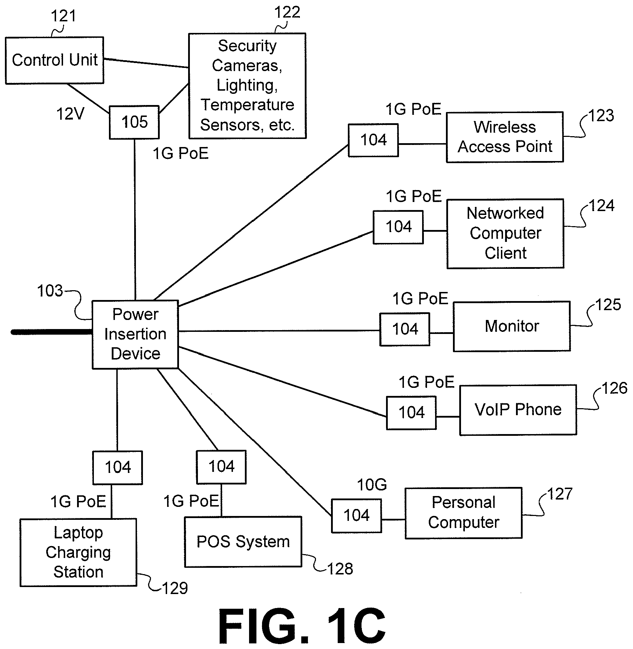

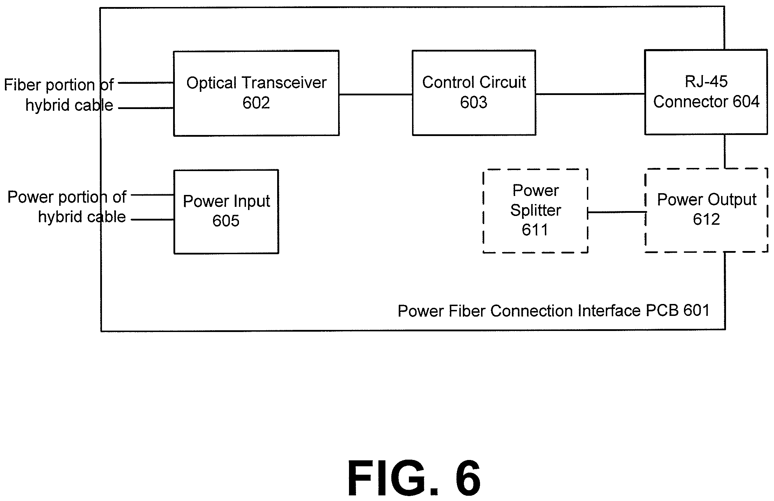

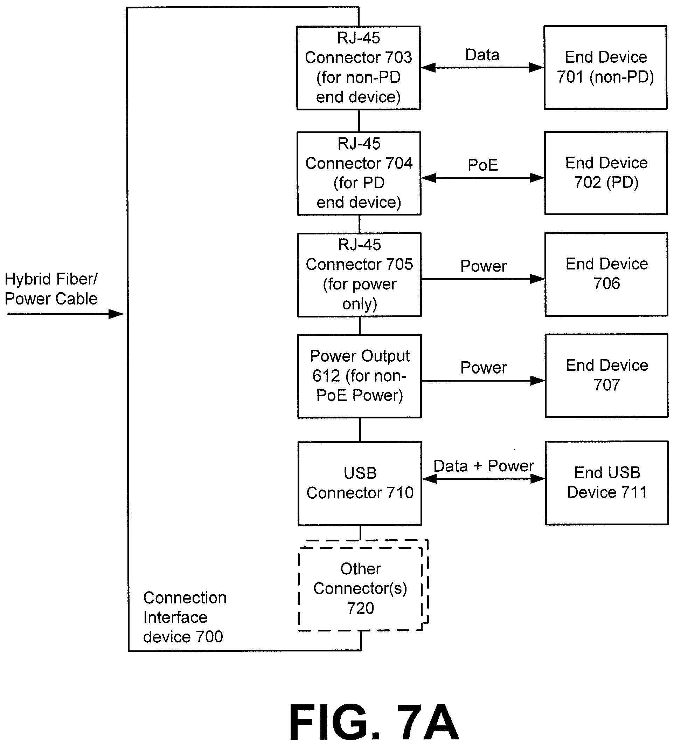

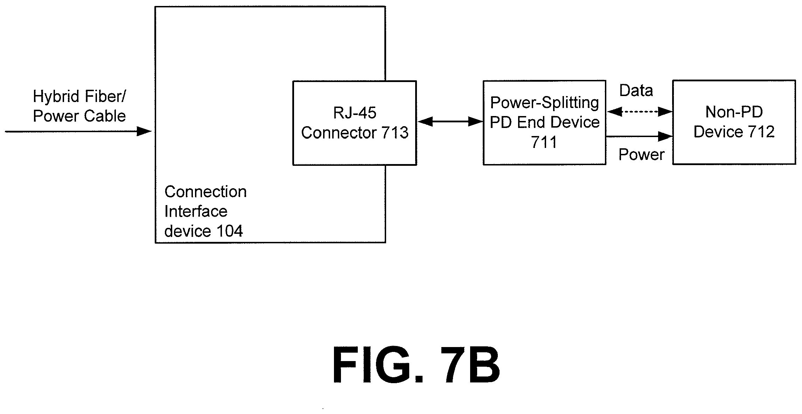

FIG. 1C is a block diagram illustrating examples of various connections that extend out from the Power Insertion Device 103. As depicted in FIG. 1C, a variety of end devices are connected to the Power Insertion Device 103 via respective Connection Interface devices 104 (and a specialized Connection Interface 105), including, for example, but not limited to, the depicted control unit 121, security camera, lighting, temperature sensors, and other outdoor device applications 122, wireless access point 123, networked computer client (e.g., a client computer running Multipoint software) 124, a monitor (e.g., a 12V monitor executing a streaming application) 125, a voice over internet protocol (VoIP) phone 126, a personal computer (e.g., with a 10G card performing data transfer) 127, a point of sale (POS) system 128, and a laptop charging station 129. The specialized Connection Interface 105 represents one exemplary way in which a general Connection Interface device 104 may be customized to suit a particular application, for example, in this illustration, to provide 12V power to the control unit 121 which controls the end device 122 in addition to providing a PoE connection to the end device 122. Some examples and features of certain customized Connection Interface devices 105 are discussed in further detail below with respect to FIGS. 6, 7A and 7B.

Further, it will be appreciated that the different end devices shown in FIG. 1C having different respective power and data requirements can be provisioned with different corresponding data rates and power levels. The annotation of PoE in FIG. 1C can refer to PoE, PoE+, LTPoE++, and other levels of PoE power, and it can be seen that certain devices may not be provisioned with power at all via the connection to the Connection Interface device 104 (it will be understood that other references to PoE, PoE+, LTPoE++, and/or PoE3+ are also exemplary and not intended to be a limitation as to the applicability of only one type/level of PoE power). Similarly, as shown in FIG. 1C, certain devices can be provisioned with 1G data rates while others are provisioned with 10G data rates. Each Connection Interface device 104/105 may be specifically designed or configured to provision the appropriate data rate(s) and power level(s) to the connected end device(s).

Some features and characteristics of the architecture described above with respect to FIGS. 1A-1C are as follows:
- Small Form Factor (SFF) Transceivers. Utilizing SFF and SFP (Pluggable) industry standards allow for significant cost reductions by using Vertical Cavity Surface Emitting Lasers (VCSELs) that have low cost and make highly automated assembly possible. To allow for implementation of these transceivers, conventional network switches with RJ-45 connectors for CAT 5 cable can be replaced with network switches enabled with SFP receptacles (e.g., FIG. 1B) or can be used in combination with a highly parallel MCA (e.g., FIG. 1A). VCSELs can also be used as part of the Connection Interface device to provide cost-efficient media conversion.
- Passive Fiber Routing. The network architecture provides for a fiber pair to be routed all the way from a port on a switch to an end device. It is advantageous that each of the fiber links can be provisioned at different data rates -- e.g., a 10G link (or even up to a 50G link) can easily be provisioned in the midst of 1G links so long as appropriate devices are connected at either ends of the fiber.
- Multi-fiber Cable Trunk Lines. The network architecture utilizes multi-fiber bundles to run the communications to a local area in a building. For example, a 24 fiber cable (which is capable of serving 12 end devices) is smaller than a single CAT 5 cable and far less expensive.
- Local Power Insertion. Because of the availability of mains power connectors (e.g., 110VAC or 220VAC) in nearly all buildings, the insertion of low voltage power via the Power Insertion Device can be accomplished generally within 30m of the end device (while at the same time the data can be transmitted over long distances to the Power Insertion Device, e.g., with 300m or 500m or more between the power insertion device and a data center). This allows for significant amounts of power to be provided to the end devices, with less power loss in the wiring than with long CAT5 cable runs, within the context of a long-distance data communications network. Further, this allows end devices to be operated in locations even where mains power connections are not available at the point of use, as well as reducing the number of mains power connections needed to power a plurality of end devices.
- Hybrid Fiber Copper Cable. The run of cable from the Power Insertion Device to the end device (e.g., a 30m hybrid power and fiber cable from the Power Insertion Device to the Connection Interface) can be a hybrid fiber/ copper cable with two multimode fibers capable of high data rates and two copper wires (e.g., 18 AWG, 22AWG or 24AWG). This combination of relatively large gauge wire and short distances allows for power levels of over 200W to be delivered per end device with less power loss. This provides opportunities for a broad classes of devices to be powered that cannot be powered by conventional PoE technology, such as TVs and even whole offices.
- PoE Compatibility. At the end device location, the Connection Interface device includes a network-powered transceiver that converts the optical fiber signal to a conventional electrical Ethernet connection. Users of the end device thus never have to interact with the network on an optical basis - the use of fiber connections is transparent to them, as they can simply plug in their conventional devices into respective Connection Interface devices. Further, the Connection Interface device can support the PoE, PoE++ (90W), and PoE3+ (180W) protocols as well. The transceiver is further configured with control logic that is able to sense whether an end device connected to the transceiver is a PoE-compatible Powered Device (PD) or not, such that the transceiver taps power from the line to power the optical transceiver when a PD is connected, or such that the transceiver will act as a PD itself to request power when the end device connected to the network has no requirement for network power.
- No Strip Fiber (NSF) and Fiber Mechanical Splices. The use of NSF and mechanical splices provides for a significant reduction in fiber termination and connecting costs relative to conventional multimode fiber and LC type connectors.
- Flexible Reconfigurability. Because the network provides power at voltage levels low enough to allow for convenient rearrangement (e.g., simple unplugging and replugging with appropriate movement of connections), and further because the power is integrated with the data communication lines up to the Connection Interface device, it is very convenient for users to set up and rearrange fiber-based networks in accordance with embodiments of the invention.

### MEDIA CONVERTER ARRAY (MCA)

As discussed above with respect to FIG. 1B, in certain embodiments, for example, where an edge switch is a fiber-based switch having Small Form-factor Pluggable (SFP) cages instead of conventional RJ-45 ports, it may not be necessary to include the MCA in the inventive network architecture, as in such cases, the media conversion from an CAT connections to fiber connections would not be needed.

In other embodiments, such as the architecture depicted in FIG. 1A, it is advantageous to have a reliable, compact media converter that uses parallel transceiver technology to reduce the cost and size of the data center's media conversion mechanism.

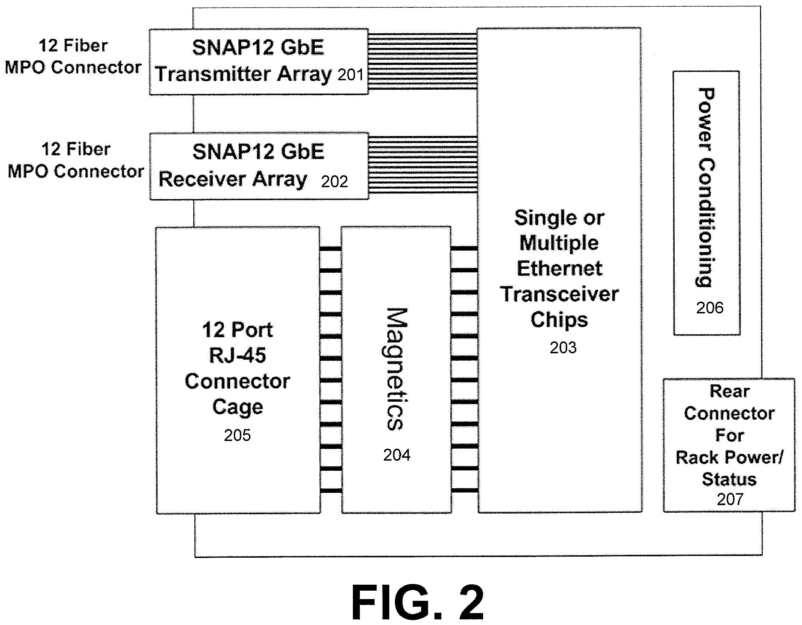

FIG. 2 is a block diagram illustrating components of an exemplary MCA which corresponds to a 12-channel media converter, and which, in practice, fits in a 3RU x 6" x 1" rack mountable module. In the exemplary embodiment depicted in FIG. 2, the MCA includes a SNAP12 GbE Transmitter Array 201 for creating the optical signal for transmission from the device, a SNAP12 GbE Receiver Array 202 for receiving the incoming communications signals, Single or Multiple Ethernet Transceiver Chips 203 for terminating and re-clocking the transmit and receive signals, magnetics 204 for creating an electrical Ethernet signal that can travel through Category type copper cables (e.g., specific high speed transmission characteristics of copper transmission cable generally require implementation of a circuit comprising of inductors and capacitors to impedance match the device electrical circuit to the cable), a 12-Port RJ-45 Connector Cage 205 for connecting the MCA to the switch through the multiplicity of CAT5 cables from the switch, a Power Conditioning circuit 206 for providing conditioned power to the device, and a Rear Connector for Rack Power/Status 207 which allows the device to be connected to the power and service channel provided for in the Rack.

The exemplary MCA shown in FIG. 2 is able to achieve low per-channel costs by utilizing highly-parallel VCSEL-based transceivers, and is able to achieve rack port densities of 144 channels per 3RU rack, and further provides dual powering and monitoring. The MCA is a Layer 1 device with minimal packet manipulation and minimum latency and jitter. It has 12 transmit and 12 receive channels, and is able to connect to two 12-fiber MPO connectors. The two 12-fiber MPO connectors interface with SNAP 12-type or equivalent transceiver modules that are mounted directly to a face plate of the MCA without any intervening fiber within the MCA. While FIG. 2 illustrates an MCA utilizing SNAP12-type parallel receiver and transmitter, other embodiments may utilize other types of parallel optical devices as well.

The front panel of the MCA further includes a 12-port RJ-45 cage with integrated magnetics (together with the two MPO connectors and locking screw mounts), which is board-mounted to come out the front panel. Status lights are also on the front panel to indicate unit status (e.g., in accordance with conventional monitoring functionalities for media converters). The front panel is further arranged in a manner where it is easy to insert and remove the connectors, while the whole unit is still able to fit into a 3RU module cage. The Ethernet Transceiver chip may be, for example, a multi-channel Ethernet transceiver (e.g., supplied by Broadcom or Marvell) well-suited for minimizing total cost and space.

Additionally, each MCA unit can operate as a single isolated unit or in a multi-unit rack, and can be configured to operate with standard wall mount power supplies.

### SPLICE AND CONNECTOR PATCH PANEL

In an exemplary embodiment, a fiber fanout assembly between the MCA 101 and the splice and connector patch panel 102 is terminated on the MCA end by two 12-fiber Multi-fiber Push-On (MPO) connectors and on the other end by 24 bare fibers. The bare fibers terminate into either Lucent Connector (LC), Subscriber Connector (SC) or mechanical splice terminations at the splice and connector patch panel of the data center.

In a particular exemplary implementation, the fiber fanout assembly is approximately 3m in length and is a glass, glass and polymer (GGP) fiber assembly. The individual fibers are further color-coded with a scheme such that the fibers can be identified with respect to which port on the edge switch they correspond to, as well as their directional polarity (i.e., from the switch or towards the switch).

In embodiments utilizing a mechanical splice termination at the Patch Panel, a special splicing tool is used to create fiber-to-fiber connections which provide relatively lower losses (compared to connectors using pre-terminated mechanical connectors). In the mechanical splice, a v-groove or ferrule holds fibers together such that mechanical contact is made between fibers. Additionally, an index matching gel resides at the contact point to further reduce the losses. The splicing tool utilizes both a fiber bed point for injecting visible light from the side of the fiber and/or a magnified viewing port to observe the fiber contact directly.

It will be appreciated that in other embodiments of the fiber communications network architecture, other patch panel configurations may be used as well, so long as they have appropriate connections for interfacing with the other components of the respective networks.

### MULTI-FIBER CABLE

In accordance with the exemplary embodiment discussed above where 24 bare fibers are terminated at the Patch Panel, in an exemplary embodiment, the multi-fiber cable between the Patch Panel and the Power Insertion Unit includes 24 fiber links. In a particular exemplary implementation, each of the fiber links is a GGP fiber cable with proper color-coding to identify the fiber.

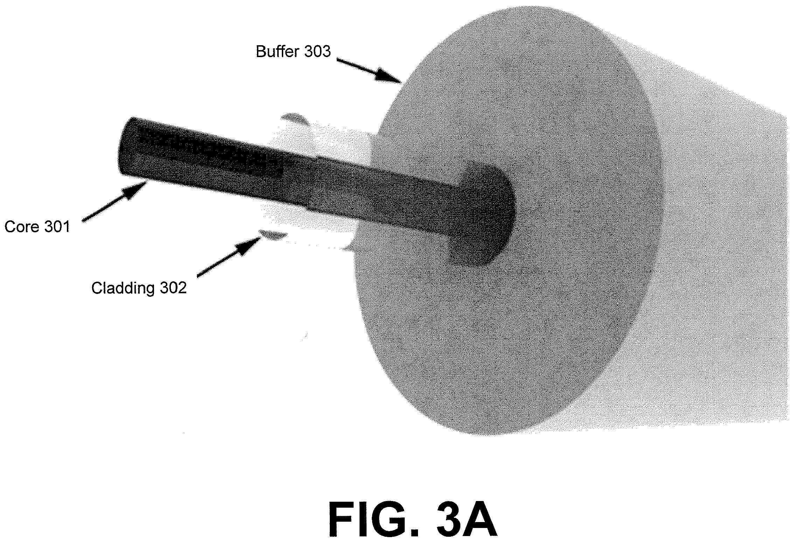

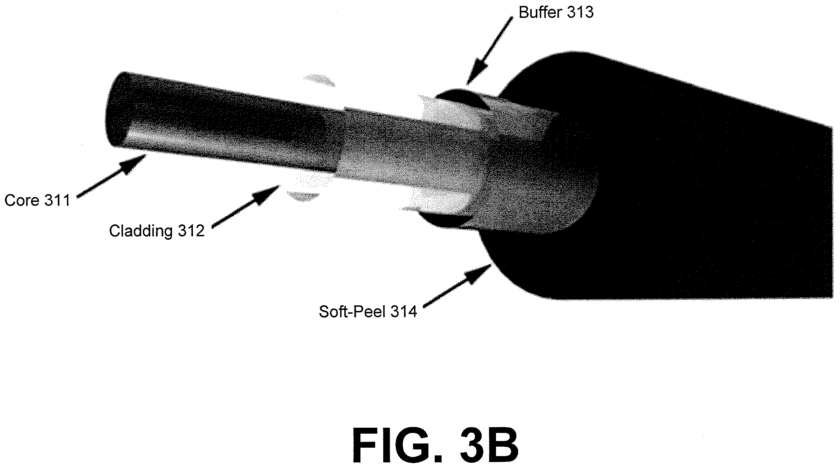

FIGS. 3A and 3B illustrate a GGP fiber cable according to an exemplary embodiment (FIG. 3B) versus a conventional GGP fiber cable (FIG. 3A). Both of FIGS. 3A and 3B include a fiber core (301 / 311), a cladding (302 / 312), and a hard-coating polymer buffer (303 / 313). However, the hard-coating polymer buffer 313 of FIG. 3B is relatively thin, and is further surrounded by a soft-peel polymer 314. Further details regarding the hard-coating polymer used is the polymer described in U.S. Patent 8,374,474.

Because this multi-fiber cable is used to create links from the data center to the area in the vicinity of end clients, embodiments of the invention are able to avoid the costs and complexity of running long CAT 5 links or multiple 10G links using remote switches. Additionally, because this multi-fiber cable is merely a passive fiber link, it eases the process of provisioning old networks with updated high-bandwidth (e.g., 10G) links and allows for a seamless upgrade of the entire network to higher bandwidths (e.g., 10G), and further allows for granular, piecemeal upgrades of particular links (e.g., one-at-a-time, if desired).

### POWER INSERTION DEVICE

In an exemplary embodiment, the Power Insertion Device is connected on one end to the multi-fiber connection described above and on the other end to a plurality of hybrid power/fiber links, and serves to provide power along the hybrid power/fiber links. In a particular exemplary implementation, because the Power Insertion Device is provided at a relatively short distance away from the Connection Interface and end client devices (e.g., typically within 30m), the Power Insertion Device acts as a Power Serving Equipment (PSE) and is able to provide hundreds of Watts of power delivery over each of a plurality of hybrid power/fiber cables to end devices with low voltage drop (and is capable of achieving power levels to allow for compatible with the PoE, PoE+, and LTPoE++ standards).

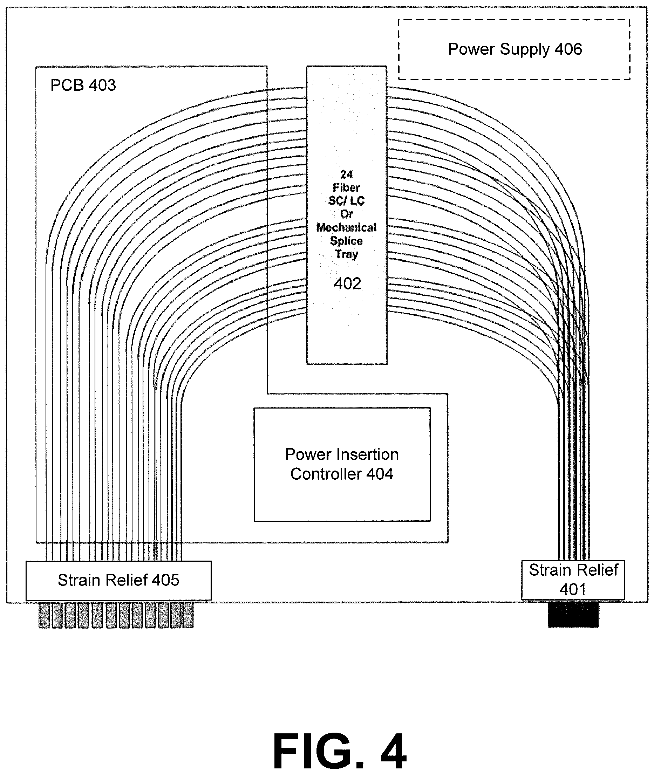

FIG. 4 illustrates components of a Power Insertion Device in an exemplary embodiment. The Power Insertion Device takes as input a fiber-only connection (e.g., a 24-fiber GGP cable), passed through a strain relief component 401. The fibers enter a connector or mechanical splice tray 402, with power being inserted via a PCB 403 (e.g., a PCB with a transistor array) having a power insertion controller 404. In an exemplary embodiment, the power insertion controller is a 12-channel LTPoE++ Controller which is configured to provide power insertion for up to 12 separate outputs connecting to up to 12 hybrid power/fiber cables. Thus, each pair of fibers in the fiber-only connection input into the Power Insertion Device may be patched through to a respective separate hybrid power/fiber cable output from the Power Insertion Device (along with a second strain relief component 405 corresponding to the output connections), with power and data both being carried along each of the hybrid power/fiber cables. The Power Insertion Device further includes a power supply 406 (e.g., configured to provide 48-55 V (DC) and 200-1000W based on a 110VAC and up to 20A input). The power supply provides for a degree of statistical multiplexing for the client devices such that the power supply can be appropriately sized to accommodate power provisioning on all lines without needing to be so large as to simultaneously provide 90W on every line.

The Power Insertion Device provides fiber fan out and power added functionality for a large number of end devices (e.g., FIG. 4 shows an exemplary Power Insertion Device capable of serving up to 12 end devices), with high power levels achievable per port (e.g., in the 90-100W range). The PCB 403 and power insertion controller 404 are configured to provide full PoE regulation (e.g., at 48V) to each of the output cables such that no additional regulation is needed further down the line (e.g., at the end device and at the Connection Interface), even with powers up to 90W in LTPoE++ applications. It will be appreciated that the copper wires (e.g., 18 AWG or 22 AWG) can be clipped to the PCB 403.

The connector or mechanical splice tray 402 can utilize mechanical splicing or conventional fiber connectors as discussed above with respect to the splice and connector patch panel (e.g., bare fiber mechanical splices; SC-SC connections with bulkheads; and/or LC-LC connections with bulkheads). The Power Insertion Device is able to run off of a 20A 110V line such that it can be conveniently powered by conventional wall outlets.

Further, the Power Insertion Device is a compact unit providing for clean fiber management. As depicted in FIG. 4, on the output side, up to 12 hybrid power/fiber cables are connectable, and the Power Insertion Device includes a strain relief component at the attachment interface of the cables to the Power Insertion Device. On the input side, a 24-fiber cable is connected and a strain relief component is similarly provided.

The power insertion provided by the PCB 403 may be accomplished, for example, through Linear Technology's LTPoE++ standard (or, in other embodiments, according to other PoE protocols). In one exemplary implementation, the power insertion controller 404 may utilize the LTPoE++ PSE Controller Chipset. Further details regarding the components and operation of the LTPoE++ PSE Controller Chipset may be found in Linear Technology, "LTPoE++/PoE+/PoE PD Controller," Datasheet 4275f, available at http://www.linear.com/product/LT4275.

### HYBRID POWER/FIBER CABLE

In an exemplary implementation, a hybrid power/fiber cable used between the Power Insertion Device and a Connection Interface device includes two fiber core elements and two wires for power transmission. In a particular exemplary implementation, the two fiber elements are OM3 50µm core GGP elements and the two wires are 22 AWG wires.

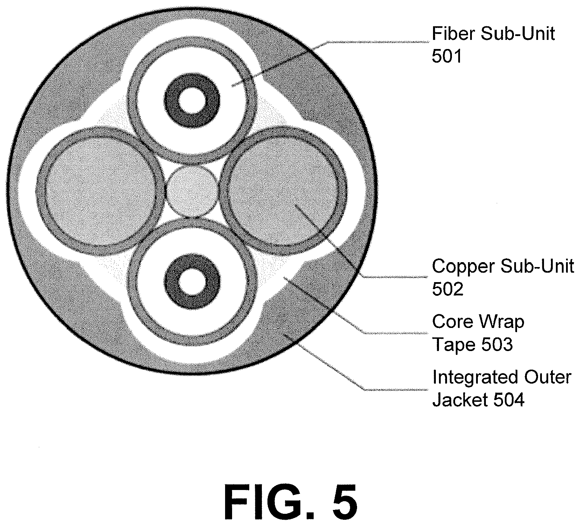

FIG. 5 is a schematic diagram illustrating various components of the hybrid power/fiber cable. The hybrid power/fiber cable includes a fiber sub-unit 501 (which includes, for example, a 900 µm tight buffer, Aramid fiber, and a PVC jacket); a copper sub-unit 502 (e.g., 22 AWG); core wrap tape 503, and an integrated outer jacket 504.

In embodiments of the invention, by using hybrid fiber/power cables, the fiber optic communications network is able to provide the ability to communicate at 1Gbs and higher speeds, while at the same time providing client end devices (such as monitors, lighting and other computing devices) with power.

### CONNECTION INTERFACE

The Connection Interface device provides an interface between the hybrid power/fiber cable and a respective cable corresponding to a client end device (e.g., a CAT 5 cable in either PoE or non-PoE applications). Thus, a user of a client end device needs only to use a conventional cable compatible with his or her client end device to connect with a Connection Interface device proximate to the client end device to utilize the fiber optic communications network according to embodiments of the invention. For example, using a short (e.g., 1-3m) CAT 5 cable, the client end device is able to receive power levels of over 100W from the fiber optic communications network, as well as receive data at data rates in the multi-Gbs range. Different particular implementations of the Connection Interface device may be particularly suited to different client end devices, e.g., by tailoring the Connection Interface device to provide data and/or power according to various communication protocols (e.g., PoE, PoE+, and/or LTPoE++).

FIG. 6 is a block diagram illustrating components of a Connection Interface device according to exemplary embodiments of the invention. The Connection Interface device includes a PCB 601, upon which an optical transceiver 602 is mounted for accepting fiber connections from a hybrid power/fiber cable (e.g., via LC connectors, SC connectors, or other connection mechanisms), and an RJ-45 connector 604 by which an end device may be connected to the Connection Interface device. Data and/or power may be provided via the RJ-45 connector 604 depending on whether the connected end device is PoE-compatible or not (for non-PoE applications, only data is provided via the RJ-45 connector 604, while for PoE applications, both data and power are provided via the RJ-45 connector 604). The power portion of the hybrid cable, which is transmitted via the copper wires of the hybrid cable, is received by a power input 605 (e.g., via + and - clips of the PCB 601). The control circuit 603 determines whether the end device connected to the Connection Interface device is a powered device (PD) or not, and operates the Connection Interface device in accordance with its determination.

In a further embodiment, Connection Interface device further includes a power splitter 611 and a power output 612. This allows non-PoE devices that nonetheless require power to be powered by the Connection Interface device. The power splitter 611 may include various levels of power and voltage for different non-PoE devices (e.g., 19V for computers/laptops, 110V for TVs, etc.), such that even non-PoE devices can conveniently receive data and power via the Connection Interface device.

Conventional PoE systems are designed for only one PD unit for every PSE port, with the Power Serving Equipment (PSE) port typically being a RJ-45 port on a switch. The Powered Device (PD) is the client device that utilizes the power provided by the PoE System. When a PD is connected to a CAT 5 cable, the PSE senses the connection and then signals the PD asking how much power the PD requires. The PD then signals back its power request which the PSE provides. The conventional PoE arrangement thus allows for only one PD for every PSE port.

An issue arises in a fiber optics-based system because the optical transceiver that converts the optical signal back to electrical, which needs power, is between the power-injecting device (e.g., the Power Insertion Device or PSE) and the end client device. Ordinarily, if a non-PD end client device that requires no power is connected to the Power Insertion Device or PSE via the Connection Interface device, the non-PD end client device would not request any power from the Power Insertion Device or PSE, and the Connection Interface device would not have any power to use for itself.

According to embodiments of the invention, in a situation where a non-PD end device is connected via the RJ-45 connector 604, the control circuit 603 of the Connection Interface device requests power from the Power Insertion Device to provide power for operation of the optical transceiver 602 (and the power splitter 611 and power output 612, if applicable). In the other situation where a PD end device is connected via the RJ-45 connector 604, the control circuit 603 causes the optical transceiver 602 (which does not require much power) to utilize the power that is already being provided to the PD end device to also provide for operation of the Connection Interface device. Some examples of optical transceivers 602 that may be used in accordance with exemplary implementations of the invention are: a 1G SFF VCSEL-based 850nm XCVR unit, or a 1G chip-on-board or TOSA/ROSA XCVR unit. Another exemplary implementation of an optical transceiver 602 that may be used includes a VCSEL integrated into a ULTEM or PEEK body having a lens and a ferrule/groove providing a fiber termination. In certain alternative exemplary embodiments, the media conversion functionality may take place in a standalone media converter instead of using optical transceiver 602, with control of the media converter and power input/output still handled by components of the Connection Interface device.

The signaling exchange that takes place between the control circuit 603 and the Power Insertion Device allows flexible and simple operation of the Connection Interface device by a user (i.e., the user does not have to know whether his or her device is a PoE-compatible device or not and can simply plug it into the RJ-45 connector 604). This signaling exchange further provides for additional advantages, such as allowing an exemplary embodiment to be achieved where both a PD end device and a non-PD end device are connected to the Connection Interface device, including configurations where the PD and non-PD end devices are connected to the Connection Interface device in parallel or in series. This allows multiple end devices to be connected to a single hybrid fiber/power link that is patched back to the switch/data center.

FIG. 7A is a block diagram illustrating exemplary ways in which the Connection Interface device may be customized (such as with respect to Connection Interface device 105 depicted in FIG. 1C). The exemplary Connection Interface device 700 depicted in FIG. 7A includes a plurality of interfaces, including an RJ-45 Connector 703 configured for a non-PD end device 701, an RJ-45 Connection 704 configured for a PD end device 702, an RJ-45 Connector 705 for providing only power to an end device 706 via an Ethernet connection, and a power output (such as the power output 612 from FIG. 6) for providing power to an end device 707 via a different type of power connection. Further, the exemplary Connection Interface device 700 includes a Universal Serial Bus (USB) connector 710 for providing power and/or data to an end device 711 that is USB-compatible. For the end USB device 711, power may be provided via a conventional USB Power protocol (with the Connection Interface device 700 acting as a PD to request power from the Power Insertion Device or PSE), or may be provided using a protocol similar to the PoE protocol at the end USB device 711 for allowing the end USB device 711 to act as a PD to request power from the Power Insertion Device or PSE (e.g., via a protocol similar to the one used for PoE signaling but adapted for communication over a USB connection).

Further other connection connector(s) 720 for power and/or data may be incorporated into the Connection Interface device 700 as well, and it will be appreciated that various embodiments of the Connection Interface device 700 may include various combinations of the depicted interfaces and/or other interfaces. Thus, the customizability of the Connection Interface device 700 provides the user with flexibility as to whether the user wants to use a non-PD end device, a PD end device, USB-compatible devices, and/or other types of devices needing power and/or data in connection with the fiber-based network.

FIG. 7B is a block diagram illustrating an exemplary operating context for a PD end device 711 that provides power-splitting functionalities with respect to a further non-PD device 712 connected to the PD end device 711. In an exemplary implementation, such as where the power-splitting PD end device 711 is a camera and the non-PD device 712 is a light, and the camera is intended to always stay on and control whether the light is on or off, the camera is able to use the power supplied to the camera via the fiber network so as to split off some of the power for operation of the light. A data connection between the light and the camera (e.g., to pass command signaling) may also be used (but in some implementations may not be necessary). It will be appreciated that other implementations may utilize other types of power-splitting PD end devices and non-PD devices connected thereto.

The configurations of the Connection Interface devices discussed above with respect to FIGS. 6, 7A and 7B may also be utilized in contexts that do not require fiber-Ethernet conversion (with the hybrid fiber/power cable input being replaced by some other form of power/data input). For example, the functionality of a conventional PoE network can be extended by using these Connection Interface device configurations to allow for more flexible configurability, including situations with multiple devices connected to a single upstream PSE port.

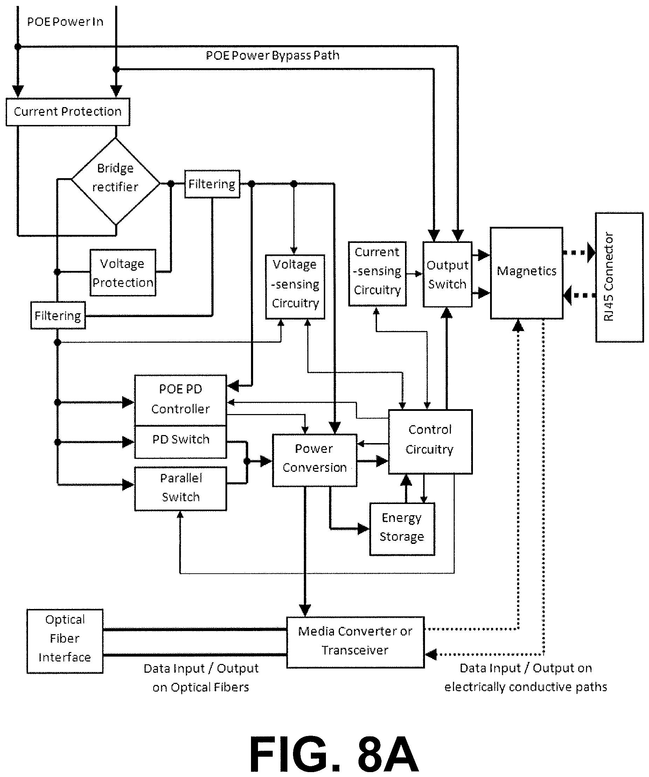

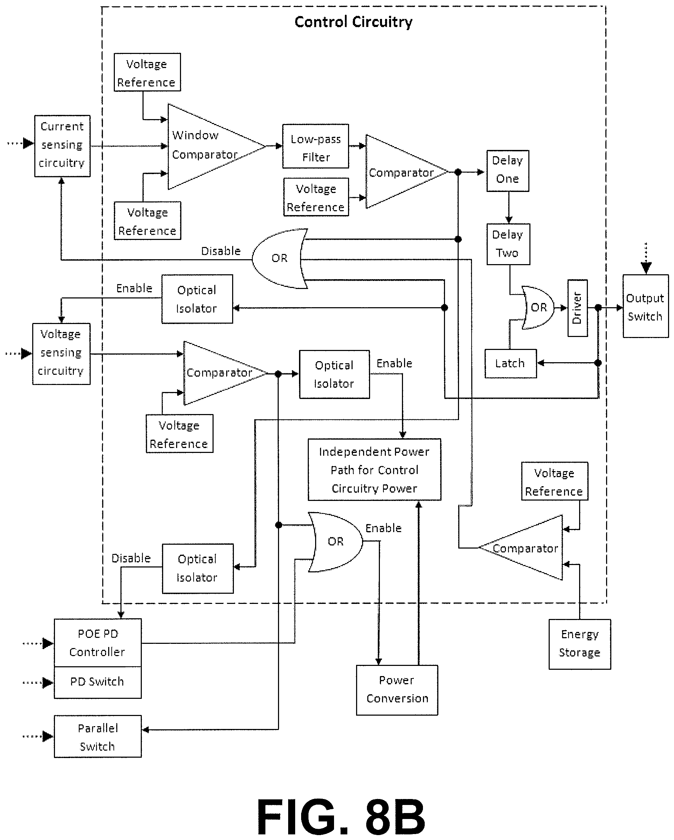

Further details and figures relating to a particular exemplary implementation of a Connection Interface device are provided below to further explain the details regarding the operation of the PD/non-PD signaling process discussed above with respect to FIG. 6. Specifically, FIG. 8A is a block diagram illustrates components of an exemplary Connection Interface device with further detail, and FIG. 8B is a block diagram illustrating components of the control circuit depicted in FIG. 8A in even greater detail.

Components of the exemplary Connection Interface device depicted in FIG. 8A include:
- A front-end power section comprising current protection, a rectifier, voltage protection, filtering and a bypass of the above for the incoming PoE power.
- Voltage sensing circuitry tied across filtered and protected PoE power.
- A PoE Powered Device (PoE PD) controller (e.g., in an exemplary implementation, this could be a Linear Technologies LTC4275A controller, although other controllers are contemplated in other implementations).
- A switching device that is controlled by the PoE PD controller for relaying PoE-provided power to the power conversion and regulation section or not. In an exemplary implementation, this switching device is internal to the controller, and, for example, is a MOSFET. In another exemplary implementation, the switching device is external to the PoE PD controller (but still controlled by the PoE PD controller).
- An additional, parallel power switching device that is external to, and not controlled by, the PoE PD controller. In an exemplary implementation, this parallel power switching device is also a MOSFET.
- A power conversion and regulation section that converts incoming power into regulated voltages and currents needed by the operational circuitry of the Connection Interface device, as well as providing galvanic isolation. In one exemplary implementation, the operational circuitry is internal to the Connection Interface device; in another exemplary implementation, the Connection Interface device includes multiple physical housings, with the operational circuitry being distributed between the housings (and with the regulated voltages and currents supplied from the housing with the power conversion and regulation section to the other housing(s)).
- Energy storage that can store sufficient energy to power the requisite circuitry during periods of transition between operational states of the Connection Interface device.
- Current sensing circuitry capable of providing a test current that is sufficiently compliant with a PoE protocol so as to detect the presence of a PoE PD end device plugged into the Connection Interface device. The Connection Interface device may further include protection circuitry (not depicted in the Figure) for the current sensing circuitry to guard against reverse or over-voltages.
- Control circuitry capable of utilizing inputs from sensing circuitry and other inputs to control the power conversion circuitry, the energy storage, the switching devices, and the PoE PD controller in a controlled and timed sequence.
- An output switch capable of carrying and switching any polarity of the full PoE power achievable by the Connection Interface device. In an exemplary implementation, the output switch is an electro-mechanical relay; in other implementations, a solid state switching apparatus may be used.
- One or more magnetic components (such as transformers and inductors) capable of carrying both the full PoE power achievable by the Connection Interface device and imposing it upon Ethernet conductive paths along with the full rate of data achievable by the Connection Interface device in a manner compliant with PoE protocols. In an exemplary implementation, the LTPoE++ protocol is utilized, with data rates up to and including Gigabit Ethernet speeds. In other exemplary implementations, PoE protocols achieving higher or lower power and/or data rates are usable as well.
- A connector compliant with Ethernet and PoE protocols. In an exemplary implementation, this is an RJ45-type connector complying with the LTPoE++ and Gigabit Ethernet standards.
- A media converter (e.g., a transceiver) capable of converting optical signals on optical fibers into electrical signals over electrically conductive paths. In an exemplary implementation, this conversion provides for Ethernet speeds up to and including gigabit speeds (or even higher speeds). The optical interface may be based on the multi-source agreement (MSA) compliant devices including, for example, but not limited to SFP, SFF, SFP+, QSFP, etc. The optical interface may also be a custom-designed transceiver that is optimized for a low cost enterprise data communications network. The media converter may be a part of the same physical construction of the rest of the Connection Interface device or may reside in a separate physical construction of the Connection Interface device such that optical fiber interface and media converter are physically separate (e.g., on a separate PCB or in a separate housing). In implementations where the media converter is separately housed, an additional Ethernet connection, with additional RJ45 connectors, as well as an additional power connection for providing power to the media converter device, may be provided to connect the media converter of the Connection Interface device to the rest of the Connection Interface device.

Components of the exemplary control circuitry depicted in FIG. 8B include:
- Optical isolators that maintain galvanic isolation, as required by PoE protocols, between the incoming PoE power and the converted power that is supplied to the media converter and other operational circuitry of the Connection Interface device.
- Voltage references and comparators that use the voltage references to evaluate the inputs from the voltage sensing circuitry and the current sensing circuitry in order to ascertain whether the values represented by those inputs fit certain criteria (e.g., to determine if the end device connected to the Connection Interface device is a PD, and/or further to determine whether a PoE power application cycle is complete such that PoE power is being provided). Alternatively, in another exemplary implementation, analog-to-digital converters may be used to convert the output of the sensing circuitry into digital values, and the digital values are compared to a numerical reference by a microcontroller (or other type of processing unit) in order to ascertain whether those inputs fit the required criteria.
- Circuit-based or microcontroller-based logic for determining when the switching devices should be activated based upon the inputs from the comparators, the PoE PD controller status, the power conversion status, and/or the energy storage charge state. In one exemplary circuit-based implementation, the control logic is rendered in discrete components comprising, for example, diodes, bipolar junction transistors, MOSFETS and resistors. In an exemplary microcontroller-based implementation, this logic is expressed as processor-executable instructions in a microcontroller.
- A latch that keeps the output switch in its active state, even as the energy stored in the energy storage approaches minimum level, to maintain the provision of power to the connected end device.
- Filtering and time delay circuits (or corresponding microcontroller programming) to ensure that events occur in a correct sequence to facilitate proper operation.
- A driver for the output switch (e.g., a low V_{CE}__{SAT} Bipolar Junction Transistor (BJT)).

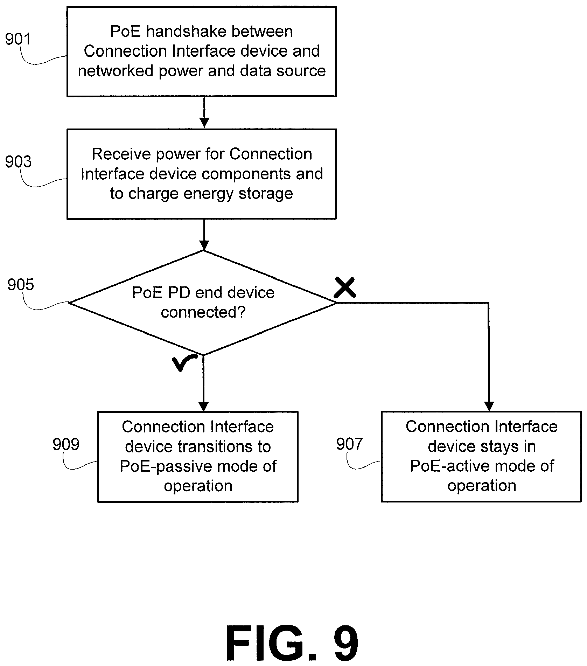

In the context of the configuration of components shown in FIGS. 8A and 8B, FIG. 9 is a flowchart illustrating a process for operating a Connection Interface device. The process begins after the Connection Interface device is properly connected to a suitable power source and fiber optic communications source (e.g., the Power Insertion Device or other PSE). At stage 901, the Power Insertion Device or PSE (i.e., a networked power and data source) is powered on and initiates a signaling exchange according to a PoE protocol to determine whether a powered device is connected thereto. The PoE PD controller of the Connection Interface device responds with the appropriate handshaking protocol that informs the Power Insertion Device or PSE that the Connection Interface device is a PD that needs power.

After the PoE handshaking is complete, the Power Insertion Device or PSE sends power to the Connection Interface device (e.g., via the hybrid fiber/power cable or other connection between them), allowing power to flow through the Connection Interface device's switch and power conversion circuitry to other circuitry at stage 903. This allows the media converter to be powered and begin functioning, as well as charging of the Connection Interface device's energy storage.

When the energy storage is sufficiently charged, a comparator enables the current sensing circuitry at stage 905, which applies a test current through the output switch to ascertain whether there is a PoE-compliant end device that is a PoE PD plugged into the RJ45 connector of the Connection Interface device. In the initial power-up state, the output switch defaults to "open" for the PoE power bypass path (i.e., the PoE power is not passed through the magnetic and the RJ45-style connector to the end device; only but the test current is). Additionally, for the determination of whether a PoE PD end device is present, a low-pass filter may be applied to reduce transients so as to minimize the likelihood of a false positive. Once the signal is confirmed present for a sufficient time, the detection of the presence of a PoE PD end device is considered to be valid.

If the test current does not detect the presence of a PoE PD end device, the media converter continues to operate to convert optical data to electrical data, and the output switch remains "open" for the PoE power bypass path (stage 907), which corresponds to remaining in a PoE-active mode of operation where the Connection Interface device continues to act as a PD and to request and receive power from the Power Insertion Device or PSE. This allows a non-PD end device plugged in to the Connection Interface device to send and receive Ethernet data in a normal fashion (while utilizing a long range enabled by the optical fiber-based communication network). In this mode where the Connection Interface device itself requests power, the Connection Interface device provides an effectively self-powered optical Ethernet transceiver, needing no independent or far-end source of power to be provided to the transceiver by the end device or a user.

If the test current detects the presence of a PoE PD end device, the Connection Interface device transitions to a PoE-passive mode of operation (stage 909) where the Connection Interface device does not act as a PD and does not request power from the Power Insertion Device or PSE. A first delay, "Delay One," is initiated, current sensing circuit is disabled, and the PoE PD controller of the Connection Interface device is disabled. The period of Delay One is set so as to allow sufficient time for the Power Insertion Device or PSE to recognize that the Connection Interface device is no longer functioning as a PD and to shut down power to the Connection Interface device. Once the Power Insertion Device or PSE shuts down power, the power conversion circuitry of the Connection Interface device will become inactive, while the control circuitry will continue to run on the power already stored in energy storage.

At the end of the Delay One period, a second delay, "Delay Two," is initiated, whose period is long enough to ensure that the state of the output switch is changed and that a latch is activated. This latch maintains the output switch in an activated state such that the output switch stays activated even as the energy remaining in energy storage of the Connection Interface device approaches its minimum. Also activated and latched is the voltage-sensing circuitry, which enables detection of incoming PoE voltage independently of the PoE PD controller (which has already been disabled during the Delay One period).

With the output switch is activated, the path that runs through the magnetics is transferred from being connected to the current sensing circuitry to being connected to the PoE Power Bypass. This then connects the "PoE Power In" through the magnetics and the RJ45-style connector to the PoE PD end device that is connected to the RJ45 connector. This allows the Power Insertion Device or PSE to initiate a PoE start-up handshaking protocol with the PoE PD end device. Until this handshaking is complete, no power is applied to the POE Power In and consequently, the control circuitry and the output switch are powered by the energy stored in energy storage. The energy storage is designed to have sufficient capacity to continue to provide enough power to the control circuitry and the output switch to operate long enough for the Power Insertion Device or PSE to begin delivering power to a PoE PD end device.

Once the Power Insertion Device or PSE is providing power to the PoE PD end device via the PoE Power Bypass of the Connection Interface device, the now-active voltage-sensing circuitry detects the presence of a PoE Power In voltage above the PoE protocol-compliant minimum. This causes the Parallel Switch to be activated to apply power to the Power Conversion circuitry. This, in turn, allows power to be applied to the media converter which provides for data communications between the Power Insertion Device or PSE and the PoE PD end device via the Connection Interface device. Thus, in this PoE-passive mode of operation where the power for the Connection Interface device is siphoned off from the power provided to the PoE PD end device by the Power Insertion Device or PSE, an independent power path is enabled to allow the control circuitry of the Connection Interface device to be re-powered without waiting for the delay of charging the energy storage section. This enables proper continued functioning and greatly reduces the likelihood of a fault condition due to a delay in re-powering the control circuitry.

With the transition to the PoE-passive mode of operation for the Connection Interface device complete, the PoE PD end device is fully powered by the Power Insertion Device or PSE, and operation of the media converter of the Connection Interface device provides the data path between the Power Insertion Device or PSE and the PoE PD end device.

If the PoE PD end device is powered off or unplugged, or if the Power Insertion Device or PSE is powered off or disconnected, the Connection Interface device resets to a default initial operating state (which it was in prior to stage 901). This puts the Connection Interface device into condition to allow for power up and initiation of communications, and minimizes the risk of damaging a connected end device.

It will be appreciated that control logic discussed above may be implemented in hardware, firmware, and/or software in different exemplary implementations of the invention.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A connection interface device (104; 700) for use in a fiber optic-based communications network, comprising:
an end device connection interface (604), connected to an end device (701; 702; 706; 707; 711; 712); and
a control unit (603), configured to determine whether the end device (701; 702; 706; 707; 711; 712) is a power over Ethernet powered device (702), and to operate the connection interface device (104; 700) in a power over Ethernet active mode or a power over Ethernet passive mode based on the determination of whether the end device (701; 702; 706; 707; 711; 712) is a power over Ethernet powered device (702);
wherein the connection interface device (104; 700) is configured to operate in the power over Ethernet active mode when it is determined that the end device is not a power over Ethernet powered device (702) such that the connection interface device (104; 700) requests and receives power from a networked power-providing device to power components of the connection interface device (104; 700), and wherein the connection interface device (104; 700) is configured to operate in the power over Ethernet passive mode when it is determined that the end device is a power over Ethernet powered device (702) such that the connection interface device (104; 700) utilizes power that is requested from the networked power-providing device by the power over Ethernet powered device (702) and sent to the power over Ethernet powered device (702) by the networked power-providing device to power components of the connection interface device (104; 700).

2. The connection interface device (104; 700) of claim 1, further comprising:
a hybrid fiber/power-compatible interface, configured to be connected to a fiber optic-based communications network via a hybrid fiber/power cable; and
an optical transceiver (602) for converting optical data signals received via the hybrid fiber/power cable to electrical data signals to send to the end device (701; 702; 706; 707; 711; 712).

3. The connection interface device (104; 700) of claim 1, wherein a connection between the end device (701; 702; 706; 707; 711; 712) and the connection interface device (104; 700) is an Ethernet connection.

4. The connection interface device (104; 700) of claim 1, wherein a connection between the end device (701; 702; 706; 707; 711; 712) and the connection interface device (104; 700) is a Universal Serial Bus connection (710).

5. The connection interface device (104; 700) of claim 1, further comprising:
a power splitter (611) and a power output interface (612) connected to the power splitter (611), configured to be connected to the end device or another end device to provide power.

6. The connection interface device (104; 700) of claim 1, further comprising:
one or more additional end device connection interfaces (720) for connecting to one or more additional end devices.

7. A fiber optic-based communications network, comprising:
the connection interface device (104: 700) of claim 1;
a power insertion device (103), connected to multiple fiber links from a data source (110) on one end and on the other end to a hybrid fiber/power cable, and configured to provide power insertion to the hybrid fiber/power cable; and
the hybrid fiber/power cable, connecting the power insertion device (103) to the connection interface device (104; 700) and being configured to transmit data and power from the power insertion device (103) to the connection interface device (104; 700).

8. The network of claim 7, wherein the data source (110) is a networked data center comprising a patch panel (102), wherein a network switch is connected to the power insertion device (103) via the patch panel (102) and the multiple fiber links.

9. The network of claim 8, wherein the networked data center further comprises a media converter array (101), configured to provide electrical to optical media conversion for data transmitted from the network switch to the patch panel (102).

10. The network of claim 8, wherein the power insertion device (103) is located at a distance of 30m or less from the connection interface device (104; 700), and wherein the power insertion device (103) is located at a distance of 300m or more from the networked data center.

11. The network of claim 7, further comprising:
a plurality of other connection interface devices connected to the power insertion device (103) via respective hybrid fiber/power cables and connected to other end devices.

12. A method for operating the connection interface device (104; 700) in the fiber optic-based communications network of claim 7, comprising:
requesting and receiving, by the control unit (603) of the connection interface device (104; 700), power from the power insertion device (103) via the hybrid fiber/power cable connecting the power insertion device (103) to the connection interface device (104; 700);
determining, by the connection interface device (104; 700), whether an end device (701; 702; 706; 707; 711; 712) connected to the connection interface device (104; 700) is a power over Ethernet powered device end device (702); and
transitioning, by the connection interface device (104; 700), in response to determining that the end device (701; 702; 706; 707; 711; 712) is a power over Ethernet powered device end device (702), from a power over Ethernet active mode of operation into a power over Ethernet passive mode of operation, wherein in the power over Ethernet passive mode of operation, the control unit (603) of the connection interface device (104; 700) is disabled and the connection interface device (104; 700) utilizes power requested from the power insertion device (103) by the power over Ethernet powered device end device (702) to power components of the connection interface device (104; 700), and wherein in the power over Ethernet active mode of operation, the connection interface device (104; 700) requests and receives power from the power insertion device device to power components of the connection interface device (104; 700).

13. The method of claim 12, wherein determining whether the end device (701; 702; 706; 707; 711; 712) is a power over Ethernet powered device end device (702) comprises:
applying a test current through an output of the connection interface device (104; 700) connected to the end device (701; 702; 706; 707; 711; 712).

14. The method of claim 12, wherein transitioning into the power over Ethernet passive mode of operation comprises:
disabling the control unit (603) of the connection interface device (104; 700);
detecting that the end device (701; 702; 706; 707; 711; 712) is being powered as a power over Ethernet powered device end device (702); and
activating a switch of the connection interface device (104; 700) to power components of the connection interface device (104; 700) other than the control unit (603).

## Patentansprüche

1. Verbindungschnittstellenvorrichtung (104; 700) für die Verwendung in einem Faseroptik-basierten Kommunikationsnetzwerk, umfassend:
eine Endeinrichtungs-Verbindungsschnittstelle (604), die mit einer Endeinrichtung (701; 702; 706; 707; 711; 712) verbunden ist, und
eine Steuereinheit (603), die konfiguriert ist zum Bestimmen, ob die Endeinrichtung (701; 702; 706; 707; 711; 712) eine Power-over-Ethernet-betriebene Einrichtung (702) ist, und zum Betreiben der Verbindungsschnittstellenvorrichtung (104; 700) in einem Power-o-ver-Ethernet-Aktivmodus oder einem Power-over-Ethernet-Passivmodus basierend auf der Bestimmung dazu, ob die Endeinrichtung (701; 702; 706; 707; 711; 712) eine Power-over-Ethernet-betriebene Einrichtung (702) ist,
wobei die Verbindungsschnittstellenvorrichtung (104; 700) konfiguriert ist für einen Betrieb in dem Power-over-Ethernet-Aktivmodus, wenn bestimmt wird, dass die Endeinrichtung keine Power-over-Ethernet-betriebene Einrichtung (702) ist, sodass die Verbindungschnittstellenvorrichtung (104; 700) Strom von einer netzwerkbetriebenen Stromversorgungseinrichtung anfragt und empfängt, um Komponenten der Verbindungschnittstellenvorrichtung (104; 700) mit Strom zu versorgen, wobei die Verbindungschnittstellenvorrichtung (104; 700) konfiguriert ist für einen Betrieb in dem Power-over-Ethernet-Passivmodus, wenn bestimmt wird, dass die Endeinrichtung eine Power-over-Ethernet-betriebene Einrichtung (702) ist, sodass die Verbindungsschnittstellenvorrichtung (104; 700) Strom verwendet, der von der netzwerkbetriebenen Stromversorgungseinrichtung durch die Power-over-Ethernet-betriebene Einrichtung (702) angefragt und an die Power-over-Ethernet-betriebene Einrichtung (702) durch die netzwerkbetriebene Stromversorgungseinrichtung gesendet wird, um Komponenten der Verbindungsschnittstellenvorrichtung (104; 700) mit Strom zu versorgen.

2. Verbindungsschnittstellenvorrichtung (104; 700) nach Anspruch 1, die weiterhin umfasst:
eine hybride Faser/Leistung-kompatible Schnittstelle, die konfiguriert ist für eine Verbindung mit einem Faseroptik-basierten Kommunikationsnetzwerk über ein hybrides Faser/Leistung-Kabel, und
einen optischen Transceiver (602) zum Wandeln von optischen Datensignalen, die über das hybride Faser/Leistung-Kabel empfangen werden, zu elektrischen Datensignalen für das Senden an die Endeinrichtung (701; 702; 706; 707; 711; 712).

3. Verbindungsschnittstellenvorrichtung (104, 700) nach Anspruch 1, wobei eine Verbindung zwischen der Endeinrichtung (701; 702; 706; 707; 711; 712) und der Verbindungsschnittstellenvorrichtung (104; 700) eine Ethernet-Verbindung ist.

4. Verbindungschnittstellenvorrichtung (104; 700) nach Anspruch 1, wobei eine Verbindung zwischen der Endeinrichtung (701; 702; 706; 707; 711; 712) und der Verbindungsschnittstellenvorrichtung (104; 700) eine USB (Universal Serial Bus)-Verbindung (710) ist.

5. Verbindungsschnittstellenvorrichtung (104; 700) nach Anspruch 1, die weiterhin umfasst:
einen Leistungssplitter (611) und eine Leistungsausgabeschnittstelle (612), die mit dem Leistungssplitter (611) verbunden ist und konfiguriert ist, um mit der Endeinrichtung oder einer anderen Endeinrichtung verbunden zu werden, um Strom zuzuführen.

6. Verbindungsschnittstellenvorrichtung (104; 700) nach Anspruch 1, die weiterhin umfasst:
eine oder mehrere zusätzliche Endeinrichtungs-Verbindungsschnittstellen (720) für die Verbindung mit einer oder mehreren zusätzlichen Endeinrichtungen.

7. Faseroptik-basiertes Kommunikationsnetzwerk, das umfasst:
die Verbindungsschnittstellenvorrichtung (104; 700) von Anspruch 1,
eine Stromzuführeinrichtung (103), die mit mehreren Faserverbindungen von einer Datenquelle (110) an einem Ende verbunden ist und an dem anderen Ende mit einem hybriden Faser/Leistung-Kabel verbunden ist und konfiguriert ist zum Vorsehen einer Stromzuführung zu den hybriden Faser/Leistung-Kabel, und
das hybride Faser/Leistung-Kabel, dass die Stromzuführeinrichtung (103) mit der Verbindungsschnittstellenvorrichtung (104; 700) verbindet und konfiguriert ist zum Senden von Daten und Leistung von der Stromzuführeinrichtung (103) zu der Verbindungsschnittstellenvorrichtung (104; 700).

8. Netzwerk nach Anspruch 7, wobei die Datenquelle (110) ein netzwerkbetriebenes Datencenter ist, dass ein Patchpanel (102) umfasst, wobei ein Netzwerkschalter mit der Stromzuführeinrichtung (103) über das Patchpanel (102) und die mehreren Faserverbindungen verbunden ist.

9. Netzwerk nach Anspruch 8, wobei das netzwerkbetriebene Datencenter weiterhin ein Medienwandlerarray (101) umfasst, das konfiguriert ist zum Vorsehen einer Wandlung von elektrischen zu optischen Medien für die von dem Netzwerkschalter zu dem Patchpanel (102) gesendeten Daten.

10. Netzwerk nach Anspruch 8, wobei die Stromzuführeinrichtung (103) mit einer Distanz von 30 m oder weniger von der Verbindungsschnittstellenvorrichtung (104; 700 angeordnet ist und wobei die Stromzuführeinrichtung (103) mit einer Distanz von 300 m oder mehr von den netzwerkbetriebenen Datencenter angeordnet ist.

11. Netzwerk nach Anspruch 7, dass weiterhin umfasst:
eine Vielzahl von anderen Verbindungsschnittstellenvorrichtungen, die mit der Stromzuführeinrichtung (103) über entsprechende Faser/Leistungs-Kabel und mit anderen Endeinrichtungen verbunden sind.

12. Verfahren zum Betreiben der Verbindungsschnittstellenvorrichtung (104; 700) in dem Faseroptik-basierten Kommunikationsnetzwerk von Anspruch 7, umfassend:
Anfragen und Empfangen, durch die Steuereinheit (603) der Verbindungsschnittstellenvorrichtung (104; 700), von Strom von der Stromzuführeinrichtung (103) über das hybride Faser/Leistung-Kabel, dass die Stromzuführeinrichtung (103) mit der Verbindungsschnittstellenvorrichtung (104; 700) verbindet,
Bestimmen, durch die Verbindungsschnittstellenvorrichtung (104; 700), ob eine Endeinrichtung (701; 702; 706; 707; 711; 712), die mit der Verbindungsschnittstellenvorrichtung (104; 700) verbunden ist, eine Power-over-Ethernet-betriebene Endeinrichtung (702) ist, und
Wechseln, durch die Verbindungsschnittstellenvorrichtung (104; 700) in Reaktion auf das Bestimmen, dass die Endeinrichtung (701; 702; 706; 707; 711; 712) eine Power-over-Ethernet-betriebene Endeinrichtung (702) ist, von einem Power-over-Ethernet-Aktivbetriebsmodus zu einem Power-over-Ethernet-Passivbetriebsmodus, wobei in dem Power-over-Ethernet-Passivbetriebsmodus die Steuereinheit (603) der Verbindungsschnittstellenvorrichtung (104; 700) deaktiviert ist und die Verbindungsschnittstellenvorrichtung (104; 700) Strom verwendet, der von der Stromzuführeinrichtung (103) durch die Power-over-Ethernet-betriebene Endeinrichtung (702) angefragt wird, um Komponenten der Verbindungsschnittstellenvorrichtung (104; 700) mit Strom zu versorgen, und wobei in dem Power-over-Ethernet-Aktivbetriebsmodus die Verbindungsschnittstellenvorrichtung (104; 700) Strom von der Stromzuführeinrichtung anfragt und empfängt, um Komponenten der Verbindungsschnittstellenvorrichtung (104; 700) mit Strom zu versorgen.

13. Verfahren nach Anspruch 12, wobei das Bestimmen, ob die Endeinrichtung (701; 702; 706; 707; 711; 712) eine Power-over-Ethernet-betriebene Endeinrichtung (702) ist, umfasst:
Anlegen eines Teststroms über einen Ausgang der Verbindungsschnittstellenvorrichtung (104; 700), der mit der Endeinrichtung (701; 702; 706; 707; 711; 712) verbunden ist.

14. Verfahren nach Anspruch 12, wobei das Wechseln zu dem Power-over-Ethernet-Passivbetriebsmodus umfasst:
Deaktivieren der Steuereinheit (603) der Verbindungsschnittstellenvorrichtung (104, 700),
Erfassen, dass die Endeinrichtung (701; 702; 706; 707; 711; 712) als eine Power-over-Ethernet-betriebene Endeinrichtung (702) mit Strom versorgt wird, und
Aktivieren eines Schalters der Verbindungsschnittstellenvorrichtung (104; 700), um andere Komponenten der Verbindungsschnittstellenvorrichtung (104; 700) als die Steuereinheit (603) mit Strom zu versorgen.

## Revendications

1. Dispositif d'interface de connexion (104 ; 700) destiné à être utilisé dans un réseau de communication sur base de fibre optique, comprenant :
une interface de connexion de dispositif terminal (604), connectée à un dispositif terminal (701 ; 702 ; 706 ; 707 ; 711 ; 712) ; et
une unité de commande (603), configurée pour déterminer si le dispositif terminal (701 ; 702 ; 706 ; 707 ; 711 ; 712) est ou non un dispositif alimenté par câble Ethernet (702), et pour faire fonctionner le dispositif d'interface de connexion (104 ; 700) en mode actif d'alimentation par câble Ethernet ou en mode passif d'alimentation par câble Ethernet sur base de la détermination du fait que le dispositif terminal (701 ; 702 ; 706 ; 707 ; 711 ; 712) est ou non un dispositif alimenté par câble Ethernet (702) ;
dans lequel le dispositif d'interface de connexion (104 ; 700) est configuré pour fonctionner en mode actif d'alimentation par câble Ethernet quand il est déterminé que le dispositif terminal n'est pas un dispositif alimenté par câble Ethernet (702), de telle sorte que le dispositif d'interface de connexion (104 ; 700) requiert et reçoit une alimentation d'un dispositif en réseau fournissant une alimentation pour alimenter des composants du dispositif d'interface de connexion (104 ; 700), et dans lequel le dispositif d'interface de connexion (104 ; 700) est configuré pour fonctionner en mode passif d'alimentation par câble Ethernet quand il est déterminé que le dispositif terminal est un dispositif alimenté par câble Ethernet (702), de telle sorte que le dispositif d'interface de connexion (104 ; 700) utilise une alimentation requise au dispositif en réseau fournissant une alimentation par le dispositif alimenté par câble Ethernet (702) et envoyée au dispositif alimenté par câble Ethernet (702) par le dispositif en réseau fournissant une alimentation pour alimenter des composants du dispositif d'interface de connexion (104 ; 700).

2. Dispositif d'interface de connexion (104 ; 700) selon la revendication 1, comprenant en outre :
une interface compatible hybride fibre/alimentation, configurée pour être connectée à un réseau de communication sur base de fibre optique via un câble hybride fibre/alimentation ; et
un émetteur-récepteur optique (602) pour convertir des signaux de données optiques reçus via le câble hybride fibre/alimentation en signaux de données électriques à envoyer au dispositif terminal (701 ; 702 ; 706 ; 707 ; 711 ; 712).

3. Dispositif d'interface de connexion (104 ; 700) selon la revendication 1, dans lequel une connexion entre le dispositif terminal (701 ; 702 ; 706 ; 707 ; 711 ; 712) et le dispositif d'interface de connexion (104 ; 700) est une connexion Ethernet.

4. Dispositif d'interface de connexion (104 ; 700) selon la revendication 1, dans lequel une connexion entre le dispositif terminal (701 ; 702 ; 706 ; 707 ; 711 ; 712) et le dispositif d'interface de connexion (104 ; 700) est une connexion USB (710), soit Universal Serial Bus.

5. Dispositif d'interface de connexion (104 ; 700) selon la revendication 1, comprenant en outre :
un diviseur de puissance (611) et une interface de sortie de puissance (612) connectés au diviseur de puissance (611), configuré pour être connecté au dispositif terminal ou à un autre dispositif terminal pour fournir une alimentation.

6. Dispositif d'interface de connexion (104 ; 700) selon la revendication 1, comprenant en outre :
une ou plusieurs interfaces de connexion de dispositif terminal additionnelles (720) pour se connecter à un ou plusieurs dispositifs terminaux additionnels.

7. Réseau de communication sur base de fibre optique, comprenant :
le dispositif d'interface de connexion (104 ; 700) selon la revendication 1 ;
un dispositif d'insertion de puissance (103), connecté à de multiples liaisons par fibre d'une source de données (110) sur une extrémité et sur l'autre extrémité à un câble hybride fibre/alimentation, et configuré pour fournir une insertion de puissance au câble hybride fibre/alimentation ; et
le câble hybride fibre/alimentation connectant le dispositif d'insertion de puissance (103) au dispositif d'interface de connexion (104 ; 700) et configuré pour transmettre des données et une alimentation du dispositif d'insertion de puissance (103) au dispositif d'interface de connexion (104 ; 700).

8. Réseau selon la revendication 7, dans lequel la source de données (110) est un centre de données connecté en réseau comprenant un panneau de brassage (102), dans lequel un commutateur réseau est connecté au dispositif d'insertion de puissance (103) via le panneau de brassage (102) et les multiples liaisons par fibre.

9. Réseau selon la revendication 8, dans lequel le centre de données connecté en réseau comprend en outre un agencement de convertisseurs de média (101), configuré pour effectuer une conversion de média électrique-optique pour des données transmises du commutateur réseau au panneau de brassage (102).

10. Réseau selon la revendication 8, dans lequel le dispositif d'insertion de puissance (103) est situé à une distance inférieure ou égale à 30 m du dispositif d'interface de connexion (104 ; 700), et dans lequel le dispositif d'insertion de puissance (103) est situé à une distance supérieure ou égale à 300 m du centre de données connecté en réseau.

11. Réseau selon la revendication 7, comprenant en outre :
une pluralité d'autres dispositifs d'interface de connexion connectés au dispositif d'insertion de puissance (103) via des câbles hybrides fibre/alimentation respectifs et connectés à d'autres dispositifs terminaux.

12. Procédé de fonctionnement du dispositif d'interface de connexion (104 ; 700) dans le réseau de communication sur base de fibre optique selon la revendication 7, comprenant :
la requête et la réception, par l'unité de commande (603) du dispositif d'interface de connexion (104 ; 700), de puissance provenant du dispositif d'insertion de puissance (103) via le câble hybride fibre/alimentation qui connecte le dispositif d'insertion de puissance (103) au dispositif d'interface de connexion (104 ; 700) ;
la détermination, par le dispositif d'interface de connexion (104 ; 700), du fait qu'un dispositif terminal (701 ; 702 ; 706 ; 707 ; 711 ; 712) connecté au dispositif d'interface de connexion (104 ; 700) est ou non un dispositif terminal alimenté par câble Ethernet (702) ; et
la transition, par le dispositif d'interface de connexion (104 ; 700), en réponse à la détermination du fait que le dispositif terminal (701 ; 702 ; 706 ; 707 ; 711 ; 712) est un dispositif terminal alimenté par câble Ethernet (702), d'un fonctionnement en mode actif d'alimentation par câble Ethernet à un fonctionnement en mode passif d'alimentation par câble Ethernet, dans lequel, en fonctionnement en mode passif d'alimentation par câble Ethernet, l'unité de commande (603) du dispositif d'interface de connexion (104 ; 700) est désactivée et le dispositif d'interface de connexion (104 ; 700) utilise l'alimentation requise au dispositif d'insertion de puissance (103) par le dispositif terminal alimenté par câble Ethernet (702) pour alimenter des composants du dispositif d'interface de connexion (104 ; 700), et dans lequel, en fonctionnement en mode actif d'alimentation par câble Ethernet, le dispositif d'interface de connexion (104 ; 700) requiert et reçoit une alimentation du dispositif d'insertion de puissance pour alimenter des composants du dispositif d'interface de connexion (104 ; 700) .

13. Procédé selon la revendication 12, dans lequel la détermination du fait que le dispositif terminal (701 ; 702 ; 706 ; 707 ; 711 ; 712) est ou non un dispositif terminal alimenté par câble Ethernet (702) comprend :
l'application d'un courant d'essai à travers une sortie du dispositif d'interface de connexion (104 ; 700) connecté au dispositif terminal (701 ; 702 ; 706 ; 707 ; 711 ; 712).

14. Procédé selon la revendication 12, dans lequel la transition au fonctionnement en mode passif d'alimentation par câble Ethernet comprend :
la désactivation de l'unité de commande (603) du dispositif d'interface de connexion (104 ; 700) ;
la détection du fait que le dispositif terminal (701 ; 702 ; 706 ; 707 ; 711 ; 712) est alimenté comme un dispositif terminal alimenté par câble Ethernet (702) ; et
l'activation d'une commutation du dispositif d'interface de connexion (104 ; 700) pour alimenter des composants du dispositif d'interface de connexion (104 ; 700) autres que l'unité de commande (603).
